**Europäisches Patentamt**

**European Patent Office**

**Office européen des brevets**

(19)

(11) Veröffentlichungsnummer : **0 316 370 B1**

# EUROPÄISCHE PATENTSCHRIFT

(12)

(45) Veröffentlichungstag der Patentschrift :
04.09.91 Patentblatt 91/36

(51) Int. Cl.$^5$ : **F16M 13/04**

(21) Anmeldenummer : **88902134.1**

(22) Anmeldetag : **03.03.88**

(86) Internationale Anmeldenummer :
**PCT/EP88/00163**

(87) Internationale Veröffentlichungsnummer :
**WO 88/06695 07.09.88 Gazette 88/20**

---

(54) **KÖRPERSTATIV.**

---

(30) Priorität : **03.03.87 FR 8702859**

(43) Veröffentlichungstag der Anmeldung :
**24.05.89 Patentblatt 89/21**

(45) Bekanntmachung des Hinweises auf die
Patenterteilung :
**04.09.91 Patentblatt 91/36**

(84) Benannte Vertragsstaaten :
**DE GB IT**

(56) Entgegenhaltungen :
DE-C- 441 148
GB-A- 2 021 800
US-A- 3 332 593

(56) Entgegenhaltungen :
US-A- 4 017 168
US-A- 4 206 983
US-A- 4 298 149
US-A- 4 394 075
US-A- 4 474 439

(73) Patentinhaber : **SACHTLER AG
KOMMUNIKATIONSTECHNIK
Dieselstrasse 16
W-8046 Garching (DE)**

(72) Erfinder : **SPIANTI, Dany
15, rue du Bourg
F-28000 Chartres (FR)**

(74) Vertreter : **Haft, Berngruber, Czybulka
Hans-Sachs-Strasse 5
W-8000 München 5 (DE)**

EP 0 316 370 B1

## Beschreibung

Die Erfindung betrifft eine tragbare Halterung, ein sog. Körperstativ zur Aufnahme einer Film- oder Videokamera.

Für Aufnahmen mit einer beweglichen Kamera ist es entweder üblich, diese auf einen Wagen zu setzen, der sich entlang eines vorgegebenen Weges bewegt, sei es auf Schienen oder einer für diesen Zweck angelegten Piste.

Eine andere Technik, die das Anlegen eines derartigen Weges vermeidet, besteht darin, eine vom Kameramann zu tragende Halterung, d. h. ein Körperstativ, zu verwenden. Dabei ist die Schwierigkeit zu überwinden, die Kamera unabhängig von Körperbewegungen stabil zu halten ; zu diesem Zweck wurden zahlreiche Anordnungen vorgeschlagen :

Aus der US-A-4298149 in Verbindung mit der GB-A-2021800 ist ein Körperstativ gemäß dem Oberbegriff des Patentanspruches 1 bekannt. Dieses Körperstativ weist eine auf den Schultern aufliegende und sich am Rücken des Kameramannes abstützende obere Halbschale und eine untere, sich auf dem Bauchbereich abstützende Halbschale auf, die der Kameramann mit Hilfe von Befestigungsgurten festzurren kann. Diese untere Halbschale ist mit einem Geschirr versehen, das mit den an den Schultern aufliegenden Teilen der oberen Halbschale verbunden ist, und von dem eine bewegliche Aufnahmevorrichtung für die Kamera verbunden ist, die im wesentlichen zwei Paare von Parallelogrammarmen aufweist, wobei an dem vorderen Ende dieser Anordnung die Parallelogrammarme mit Hilfe eines beweglichen Befestigungsteiles verbunden sind, mit dem die Kamera über weitere bewegliche Teile verbunden werden kann. Die Parallelogrammarme sind jeweils mit Ausgleichsfedern versehen, um das Gewicht der Kamera auszubalancieren.

Für dieses bekannte Körperstativ ist insbesondere die Konstruktion der die Parallelogrammarme aufweisenden Aufnahmevorrichtung für die Kamera kompliziert. Die Aufnahmevorrichtung enthält eine große Anzahl von Einzelteilen sowie Federn, wobei es noch hinzukommt, daß diese Federn nur schwer auswechselbar sind, um das Körperstativ an unterschiedliche Kameragewichte anzupassen.

Außerdem sind die Parallelogrammarme lediglich an einer Stelle mittig in dem Geschirr zwischen der unteren und oberen Schale befestigt, so daß sämtliche Kräfte in diese Stelle eingeleitet werden. Verformungen des Traggestelles während der Filmaufnahmen sind die Folge. Außerdem liegt, betrachtet man den Kameramann mit dem Körperstativ von der Seite, der Befestigungspunkt der Aufnahmevorrichtung für die Kamera mit den Parallelogrammarmen sehr weit vorne, vor dem Bauchbereich. Das gesamte Gewicht der Aufnahmevorrichtung und dasjenige der Kamera führt somit zu erheblichen Drehmomenten auf die Wirbelsäule, so daß für den Kameramann trotz der die Momente verteilenden unteren Schale die Dreharbeiten kräftezehrend sind. Aufgrund der annähernd punktförmigen Befestigung der Aufnahmevorrichtung für die Kamera mit dem Traggestell und Abstützung der oberen Schale an den Schultern, müssen die Schalen entsprechend festgezurrt werden, was für den Kameramann beim Drehen einengend ist. Diese ergonomischen Nachteile verhindern, daß der Kameramann auch über eine längere Zeit ununterbrochen Filmaufnahmen drehen kann.

Aus der US-A-4394075 (sowie aus der US-A-4474439) ist eine weitere Anordnung bekannt mit einem Arm, der gelenkig an einem Traggestell befestigt ist und an den menschlichen Oberkörper angepaßt ist.

Die Dämpfung für jeden der beiden Halbarme, die diese Anordnung bilden, erfordert die Serienmontage von drei Zugfedern, die untereinander durch ein Kabel verbunden sind, sowie von zwei Riemenscheiben zur Aufnahme von einer ausreichenden Anzahl von Windungen im Inneren des ersten Halbarmes, um es so der Anordnung aus den drei Federn zu ermöglichen, sich wie eine einzige Feder zu verhalten, die entlang der Diagonalen des verformbaren Parallelogramms ausgerichtet ist, das jedes der beiden Halbarme bildet.

Die große Anzahl von Verbindungen aus Federn-Kabeln-Riemenscheiben macht die Anordnung störanfällig, so daß die Verwendung eines zweiten Sicherheitskabels erforderlich ist ; sofern sich nämlich die Anordnung durch Unterbrechung der Verbindungen auflöst, kann das Kabel den Kameramann verletzen. Ferner erfordert diese Anordnung eine Verdoppelung sämtlicher Teile für die beiden gelenkigen Halbarme, wodurch das Gewicht der Anordnung erhöht wird.

Ferner ist es nicht möglich, diese bekannte Anordnung an das Gewicht unterschiedlicher Kameras anzupassen oder an unterschiedliche Funktionsweisen unter Verwendung verschiedener Zusatzteile ohne die Eigenschaften der Dämpfungsfedern zu verändern (insbesondere die Federspannung, was zur Folge hat, daß für ein gegebenes Gewicht eine einzige Feder ausreicht ; eine Gewichtsänderung bewirkt, daß keine ausreichende Dämpfung mehr entlang des gesamten vom Haltearm zurückgelegten Weges vorhanden ist).

Von der Vorderseite aus gesehen liegt der Befestigungspunkt für den Dämpfungsarm sehr weit seitlich bezüglich einer Mittellinie durch den Körper. Dieser Punkt erzeugt ein Kraftmoment durch die Verschwenkung des Traggestells, das nicht fest an den Seiten des Kameramanns anliegt. Diese Ausgestaltung des Traggestells bewirkt, daß der Brustgurt den größten Teil der Kraft aufnimmt und die Seiten stark zusammendrückt.

Von der Seitenebene aus gesehen, liegt die Befestigung des Armes sehr weit vorne. Der Abstand des Befe-

EP 0 316 370 B1

stigungspunkts von der Ebene, die die Wirbelsäule enthält, auf Lendenhöhe, erhöht erheblich das aus den verschiedenen sich dort abstützenden Kräften stammende Moment. Dies bedeutet, daß der Lendenbereich einen großen Teil der Kräfte aufnehmen muß, die aus den Momenten resultieren aufgrund des Kameragewichts und dessen Zubehör (Videomonitor...) bezüglich der Wirbelsäule und aus den Kräften, die auf die kleine Seite des Parallelogramms wirken, durch die Zugfedern auf Höhe der Armbefestigung.

Der Brustgurt des Traggestells begrenzt die Atembewegungen und hindert die freien Bewegungen des Schultergurtes und demzufolge die Beweglichkeit der oberen Gliedmaße, die möglichst erschütterungsfrei die Kamerabewegungen ausführen sollen. Der Ort der Befestigung des Armes beeinträchtigt im übrigen die Schultergurte bezüglich der Aufnahme der aus dem Gewicht des Armes und der Kamera resultierenden Kräfte. Die Wirbelsäule insgesamt ist dadurch schlechter belastet.

Aus der US-A-4206983 ist eine andere Anordnung bekannt.

In mechanischer Hinsicht erfordert diese Anordnung die Verwendung zahlreicher unterschiedlicher Bauteile (Federn, Kabel, Riemenscheiben) ; die Vielzahl derartiger Verbindungen kompliziert den Aufbau und macht die Anordung störanfällig. Trotz der komplizierten Anordnung ist keine wirksame Anpassung gegeben, um das Gewicht unterschiedlicher Kameras und unterschiedlicher Ausrüstungen zu kompensieren. Die Anordnung für den Gewichtsausgleich der Kamera, die hinter dem kardanförmigen Haltebügel angeordnet ist, ermöglicht keine Variation des Trägheitsmomentes der einzelnen Bauteile, um so gute Resultate bei Aufnahme großer Geschwindigkeit zu erzielen.

Auch in ergonomischer Hinsicht sind zahlreiche Nachteile festzustellen.

Der Aufbau ist asymmetrisch und nicht körpergerecht. Das Anlegen der Anordnung an den Körper des Kameramanns ist ohne Hilfe äußerst schwierig. Der Betätigungsbereich beschränkt sich auf die vordere Stellung der Kamera, so daß keine freie Positionswahl möglich ist.

Die rückwärtige Anordnung der Schwenkachse für den gelenkigen Arm oberhalb der Schulter bewirkt, daß die Summe der Belastungen (Gewicht der Kamera und der Bauteile plus Rückholspannung der Federn) senkrecht hinter der Wirbelsäule auftritt. Diese Ausgestaltung bedingt, daß der Bauchgurt und die Schultergurte die Gesamtheit dieser Kräfte aufnehmen müssen, wodurch die Druckbelastungen steigen.

Die große Höhe der Anordnung (vom Gürtel bis zur Schwenkachse des Armes) bedingt, daß alle Bewegungen der Wirbelsäule (Biegungen nach vorn und zur Seite) verstärkt werden. Ferner bedingt diese Ausgestaltung, daß die größte Steifigkeit im obersten Bereich besteht, was sich als Spannungsfaktor, Störfaktor und als Beschränkung der freien Bewegungen erweist. Auch die Befestigungen (Bauchgurt und Schultergurte) sind für eine seitliche Stabilität wenig wirksam. Die Anordnung der Kamera und der zusätzlichen Bauteile begrenzt deren freie Verschwenkbarkeit.

Schließlich bewegt die Anordnung des Suchers (Monitor), daß bei größeren Schwenkbewegungen der Kamera dessen Neigung ständig nachgestellt werden muß, da der Sucher oder Monitor nicht unabhängig von der Kamerastellung ist.

Aufgabe der vorliegenden Erfindung ist es, ein Körperstativ insbesondere für Kameras zu schaffen, bei dem die oben angegebenen Nachteile vermieden sind, und das insbesondere einen einfachen und störunanfälligen Aufbau aufweist, der körpergerecht ausgeführt ist.

Das erfindungsgemäße Körperstativ weist ein von einem Kameramann zu tragendes Traggestell auf sowie bewegliche, ausbalancierte Arme zur Aufnahme des zu tragenden Gegenstandes. Erfindungsgemäß weist das Traggestell eine steife, im wesentlichen ringförmige Schale auf, die aus zwei Halbschalen besteht, einer vorderen unteren Halbschale und einer hinteren oberen Halbschale, die sich auf unterschiedlichen Höhen befinden und die sich auf den Unterkörper bzw. den rückwärtigen Lendenbereich des Kameramannes abstützen, wobei symmetrisch auf beiden Seiten der Schale schwenkbare Befestigungsanordnungen vorgesehen sind für zwei vordere Halbrahmen, die derart miteinander verbunden sind, daß sie ständig zueinander parallel sind und die ein gelenkiges Verbindungsteil aufweisen, mit dem die Kamera über gelenkige Teile verbunden ist, während elastische Ausbalancierteile zwischen dem Halbrahmen und der Schale vorgesehen sind, um das Kameragewicht im wesentlichen auszubalancieren.

Die Schale ist anatomisch geformt, während vorteilhafterweise die schwenkbaren Befestigungsanordnungen im wesentlichen in der senkrechten Ebene angeordnet sind, die die Wirbelsäule des Kameramannes enthält, wobei sie im wesentlichen senkrecht zu einer Halterung ausgerichtet sind, die fest mit einem Bügel verbunden ist, der wiederum mit der vorderen Halbschale verbunden ist.

Vorteilhafterweise sind die Enden eines jeden Halbrahmens gleitend und einstellbar in Buchsen geführt, die mittels der schwenkbaren Befestigungsanordnungen verschwenkbar sind.

Vorteilhafterweise weist die Ausbalancieranordnung wenigstens eine Zugfeder auf, die wenigstens einen Halbrahmen in Richtung nach oben und nach hinten unter einen Winkel von ungefähr 45° beaufschlagt.

Vorteilhafterweise weist das gelenkige Verbindungsteil ein senkrechtes Tragteil auf, das gelenkig und gleitend mit den zwei Halbrahmen verbunden ist, sowie eine das Gleiten blockierende Einrichtung auf, die mit dem

3

Gelenk der Halbrahmen zusammenwirkt.

Vorteilhafterweise weist das gelenkige Verbindungsteil ein Tragteil auf, das mit dem Halbrahmen verbunden ist und an dem ein Arm angelenkt ist, der mittels paralleler Gelenkachsen gelenkig ist und an dessen Ende eine Anordnung befestigt ist zur gelenkigen Halterung einer Kamera. Am gelenkigen Arm ist vorteilhafterweise ein Videomonitor angeordnet.

Vorteilhafterweise weist die Halteanordnung für die Kamera ein Tragrohr auf, an dessen einem Ende die Halterung für die Kamera und an dessen anderem Ende Ausbalancierteile vorgesehen sind, deren Stellung radial und in einer radialen Ebene winkelmäßig einstellbar ist.

Weitere Eigenschaften und Vorteile der Erfindung gehen aus der nachfolgenden Beschreibung eines bevorzugten Ausführungsbeispiels hervor im Zusammenhang mit der Zeichnung ; es zeigen

Fig. 1 eine schematische, seitlich versetzte Rückansicht des von einem Kameramann getragenen erfindungsgemäßen Körperstativs ;

Fig. 2 eine vergrößerte Teilansicht eines Teiles des Traggestells und der Ausbalancierarme ;

Fig. 3 eine Rückansicht eines Einzelteils der Ausbalancieranordnung ;

Fig. 4 eine teilweise versetzte Vorderansicht der Verbindungsanordnung der Halbrahmen ;

Fig. 5 die Traganordnung für die Kamera ; und

Fig. 6 eine vergrößerte Ansicht der einstellbaren Anordnung zum Ausbalancieren der Kamera.

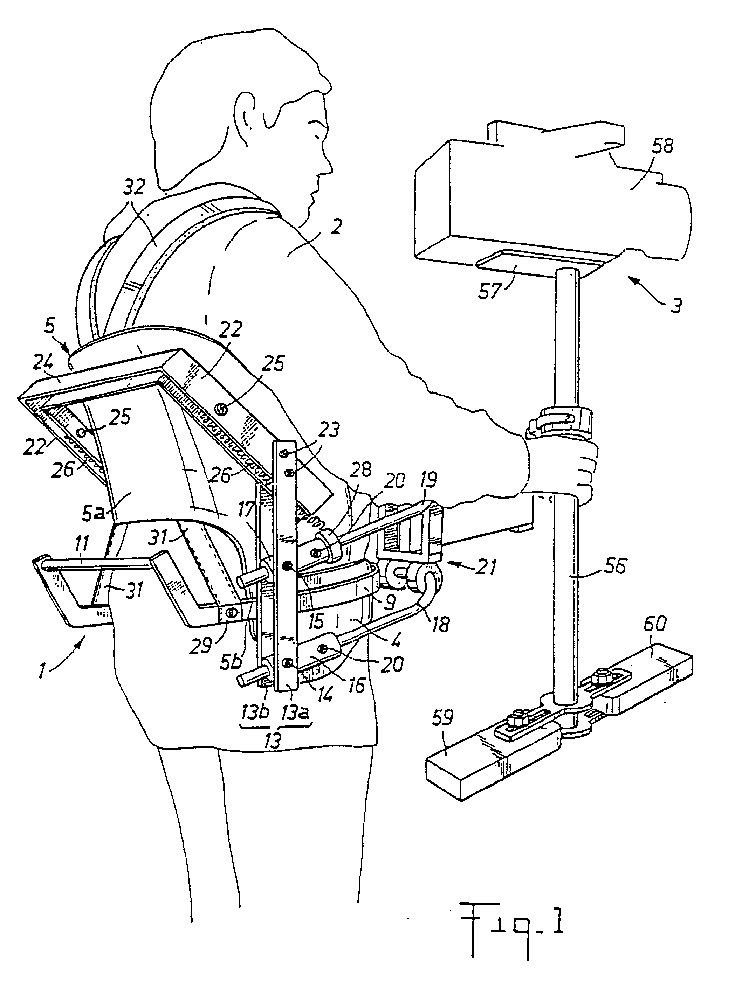

In Fig. 1 ist ein erfindungsgemäßes Körperstativ 1 dargestellt, das von einem Kameramann 2 getragen wird und eine Kamera 3 trägt. Das Stativ 1 weist eine ringförmige steife oder halbsteife Schale auf, die aus zwei Halbschalen 4 und 5 besteht : die vordere untere Halbschale 4 stützt sich auf dem Bauchbereich des Kameramanns ab, während die hintere höhere Halbschale 5 eine Art Rückenlehne bildet und sich auf dem rückwärtigen Lendenbereich des Kameramanns abstützt. Die Halbschalen 4 und 5 sind derart anatomisch geformt, daß sie an den vorderen bzw. rückwärtigen Teil des Körpers angepaßt sind und diesem umschließen.

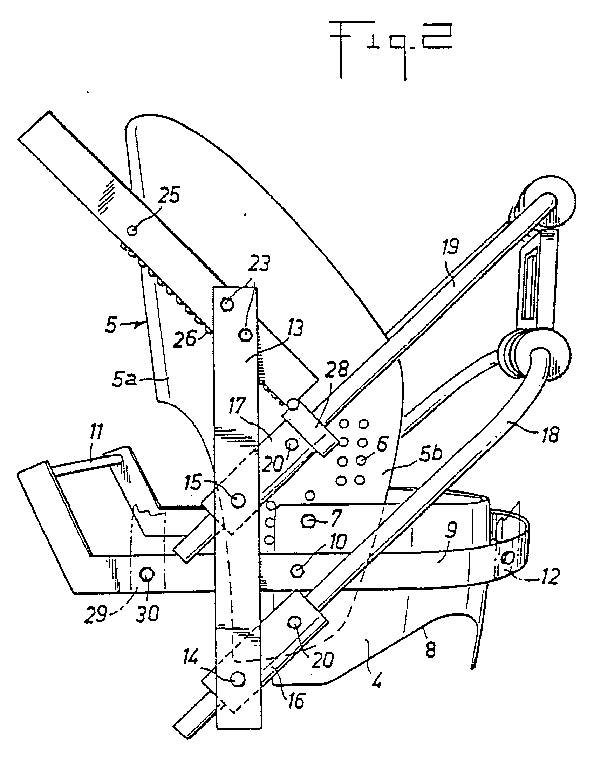

Es ist möglich, die beiden Halbschalen 4 und 5 zu einem einzigen Teil zu vereinigen, jedoch ist es vorteilhaft, wenn sie aus zwei trennbaren Einzelteilen bestehen, die zu unterschiedlichen Konfigurationen zusammengefügt werden, um so dem Körperbau des Kameramanns Rechnung zu tragen. Zu diesem Zweck weist die Halbschale 5 im wesentlichen einen abgerundeten Rückenabschnitt 5a auf, zwischen zwei Seitenabschnitten 5b, die sich nach unten verlängern. Die Seitenabschnitte 5b sind teilweise von den Seitenenden der vorderen Halbschale 4 bedeckt. Eine Vielzahl von Öffnungen 6 ist in dem möglichen Abdeckbereich der Abschnitte 5b vorgesehen, um wenigstens mit einer Schnellbefestigung (Bolzen 7 in Fig. 2) dahingehend zusammenzuwirken, daß dieser eine entsprechende Öffnung in den Seitenenden der vorderen Halbschale 4 durchsetzt. Die vordere Halbschale 4 ist ferner mit Abschrägungen bzw. Aussparungen 8 versehen an ihren unteren Bereichen, um eine freie Bewegung der Oberschenkel zu ermöglichen.

An der vorderen Halbschale 4 ist ein flacher Bügel 9 befestigt, mittels dreier Bolzen 10, von denen in Fig. 2 nur einer sichtbar ist, wobei der Bügel im wesentlichen an die Form der Halbschale 4 angepaßt ist ; seine Enden sind nach hinten verlängert und durch einen Stab 11 miteinander verbunden. Der Bügel kann mehrere Öffnungen aufweisen, die unterschiedliche Befestigungsstellen bilden. Obwohl er im wesentlichen an die allgemeine Form der Halbschale 4 angepaßt ist, kann er in einem geringen Abstand zu ihr zwischen zwei seitlichen Befestigungspunkten angeordnet sein, um so eine vordere Befestigungsschlaufe für die beiden Gurtteile zu bilden.

An den Seitenabschnitten des Bügels 9 sind auf jeder Seite des Körpers zwei Halteplatten 13a und 13b befestigt, die parallel zueinander und im wesentlichen senkrecht ausgerichtet sind und die über eine nicht dargestellte Schraubverbindung am Bügel 9 befestigt sind. Die in ihrer Gesamtheit mit 13 bezeichneten Platten verlaufen im wesentlichen senkrecht zu den Seitenarmen des Bügels 9.

Die Platten 13a und 13b nehmen beidseitig ihrer Befestigung am Bügel zwei Achsen 14, 15 auf, an denen Buchsen 16, 17 schwenkbar angeordnet sind, in die die geraden Verlängerungen der beiden Halbrahmen oder Bügel 18, 19 aus Rohr gleitend eingreifen. Eine Schraube 20 ermöglicht, die Bügel 18, 19 in den Buchsen 15, 16 festzuhalten.

Die Bügel 18 und 19 sind vorne durch ein gelenkiges Verbindungsteil 21 miteinander verbunden (das fest mit dem Gerät 3 in Verbindung steht). Die Höhe des Teils 21 ist gleich dem Abstand, der die Achsen 14, und 15 trennt, derart, daß die Bügel parallel zueinander in sämtlichen Stellungen sind, die sie aufgrund der Schwenkbewegung der Buchsen 16, 17 einnehmen können und zwar in seitlichen senkrechten Ebenen.

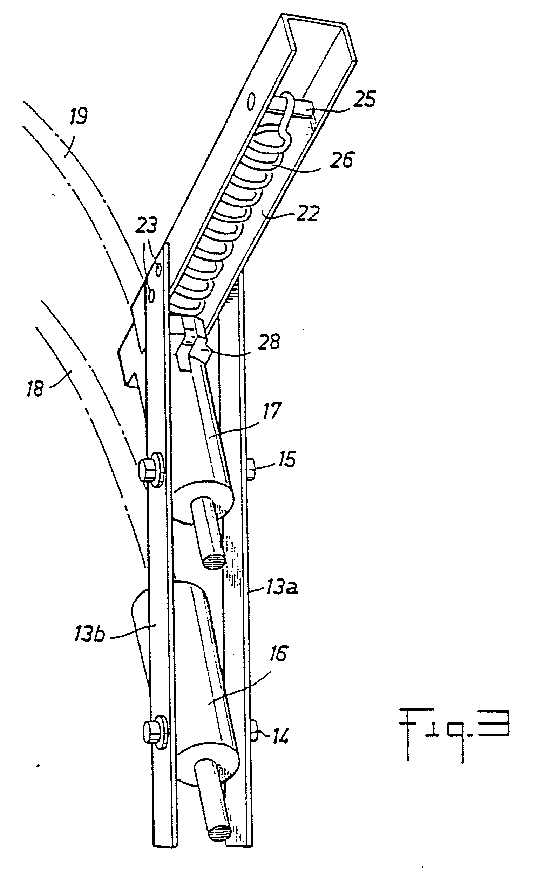

Die Platten 13a und 13b (siehe auch Fig. 3) klemmen an ihren Enden zwei U-förmige Profile 22 ein, die mittels Bolzen 23 befestigt sind und untereinander durch eine Schiene 24 verbunden sind. Die Profile 22 sind im wesentlichen um 45° bezüglich der senkrechten Platten 13a und 13b geneigt. Zwischen den beiden Schenkeln eines jeden Profils 22 ist eine Achse 25 angeordnet, an der ein Ende eine schraubenförmigen Zugfeder 26 befestigt ist, deren anderes Ende an einer Achse 27 verankert ist, die in einem Teil 28 vorgesehen ist, das mit dem Vorderteil der Buchse 17 fest verbunden ist. Die Federn 26 beaufschlagen demzufolge kontinuierlich die gelenkigen Bügel 18, 19 in Richtung nach oben zu einer oberen Anschlagstellung hin, die durch das untere Ende des Profils 22 gebildet wird und im wesentlichen einer Neigung der Bügel um 45° nach oben entspricht.

Hinter den seitlichen Verlängerungen des flachen Bügels 9 sind rückwärtige Befestigungsschlaufen 29 vorgesehen, die mittels eines Bolzens 30 befestigt sind für die einstellbaren Gurte 31, deren anderes Ende bei 12 befestigt ist.

Die Gurte 31 kreuzen sich hinten und verlaufen zwischen der Lehne der Halbschale 5 und dem Rücken des Kameramannes anschließend über dessen Schultern, wobei sie in diesem Bereich mit langgestreckten Polstern 32 versehen sind, bevor sie im wesentlichen parallel zueinander nach unten bis zur Befestigungssstelle 12 verlaufen.

Zusätzlich oder anstelle der Gurte 31 kann auch ein Lendengurt vorgesehen sein, der auf Höhe der Seiten der vorderen Halbschale 4 angebracht sein kann und letztere durchsetzt, um diese danach zu umschlingen, z. B. in Form einer Befestigungsschlaufe mit Klettverschluß.

Bei der erfindungsgemäßen Anordnung sind die Zugfedern leicht auswechselbar, weil nur die beiden Achsen 25 und 27 gelöst werden müssen. Anstelle die Federn an der Buchse des oberen Bügels 19 zu befestigen, können sie auch am unteren Bügel oder an beiden befestigt werden. Auch kann die Neigung der Federn von 45°, obwohl dies besonders vorteilhaft ist, auch einen anderen Wert zwischen 45° und 90° bezüglich der Waagrechten aufweisen, wobei es wesentlich ist, daß die Feder derart angeordnet wird, daß sie ein relativ konstantes Moment auf die Bügel während deren gesamten Schwenkweges ausübt. Anstelle von Zugfedern können auch Druckfedern verwendet werden, die dann in einer zu den Bügeln 18, 19 geeigneten Stellung anzubringen sind.

Die Erfindung ermöglicht auch das Eingreifen der Bügel 18, 19 in die zugehörige Buchse durch Einstellung der Schrauben 20 zu verändern und damit die Länge des Hebelarms einzustellen.

Die symmetrische Ausgestaltung der Anordnung ist sowohl vorteilhaft für die Handhabbarkeit als auch für die Ergonomie. Die Schwenkachsen der Buchsen befinden sich im wesentlichen in der weit nach hinten verlegten, die Wirbelsäule aufnehmenden Ebene ; anderenfalls könnten erhebliche Belastungen für die Wirbelsäule aufgrund der auftretenden Kräfte eintreten.

Aufgrund der Steifheit der Schale und der Anordnung der einzelnen Bauteile, insbesondere des ebenen Bügels 9, übt das Gewicht der Kamera auf die Gesamtanordnung ein Moment aus, daß durch ein Körpermoment des Kameramanns auf die Schale ausbalanciert wird, mit einer sich selbst verstärkenden Klemmwirkung: die vordere Halbschale 4 übt einen Druck auf die Bauchregion aus, während die anatomisch angepaßte hintere Stützfläche auf den rückwärtigen Lendenbereich eine nach vorn und nach oben wirkende Kraft ausübt, wobei die Gesamtheit der Reibungen die senkrechte Komponente des Gewichts der gesamten Anordnung ausbalanciert, so daß diese Art von Klemmwirkung die Druckkräfte der Schultergurte sehr stark verringert und diese theoretisch überflüssig macht. Die anatomische Anpassung der rückwärtigen Halbschale 5 mit ihren seitlichen Abstützungen ermöglicht ferner eine Kontrolle aller seitlichen Schwenkbelastungen während einer Verschiebung der Kamera von einer Seite zur anderen. Diese Stabilität beeinflußt nicht im geringsten die Brustbewegungen des Kameramannes und vermeidet damit ihn in seiner Bewegungsfreiheit einschränkende Brustgurte.

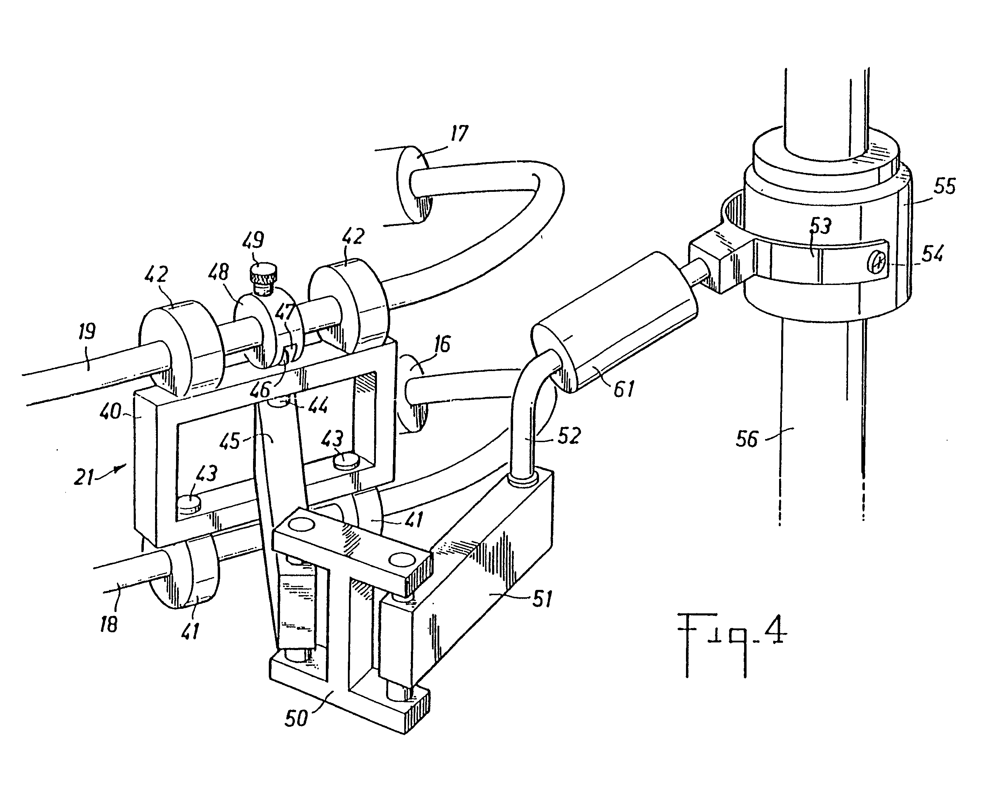

In Fig. 4 erkennt man, daß das Verbindungsteil 21 aus einem rechtwinkligen Rahmen 40 besteht, an dessen waagrechten langen Seiten senkrecht und parallel zueinander zwei untere Gelenkringe 41 und zwei obere Gelenkringe 42 mittels Bolzen 43 befestigt sind. Die Ringe 41, 42 weisen einen inneren Durchmesser auf, der geringfügig größer ist als der Außendurchmesser der Bügel 18 und 19, so daß diese frei in den Ringen 41 und 42 gleiten und verdrehen können. Da die Bügel 18, 19 gebogen sind, ist die Berührungsfläche mit den Ringen 41, 42 begrenzt und damit die Reibungen verringert. Die einfachen Ringe 41, 42 können auch durch Kugellager ersetzt werden ; ein Schwenklager 44 ist senkrecht in der Mitte des Rahmens 40 derart vorgesehen, daß es als Schwenkachse für eine sich nach vorne erstreckende Platte 45 dient, wobei das Schwenklager 44 oder dessen Verlängerung 46 sich nach oben aus dem Rahmen 40 heraus durch eine Öffnung in dessen Oberseite erstreckt und mit geringem Spiel in eine Aussparung eingreift, die sich wenigstens über einen Teil eines Blockierrings 48 erstreckt, der am Bügel 19 zwischen den Ringen 42 vorgesehen ist. Der Ring 48 kann durch eine Feststellschraube 49 festgestellt werden, die das Schwenklager 46 in seitlicher Richtung blockiert und demzufolge die Anordnung 21 insgesamt. Aufgrund der sich in Umfangsrichtung erstreckenden Nut 47 wird die Schwenkbewegung der Bügel 18, 19 vom Verbindungsteil 21 in keiner Weise beschränkt.

Während ein Ende der Platte 45 um das Schwenklager 44 schwenkt, ist das andere Ende mit einer Achse versehen, an der ein H-förmiges Verbindungsteil 50 angelenkt ist, an dem eine zweite Platte 51 in waagrechter Richtung verschwenkbar angelenkt ist. Am entfernten Ende dieser Platte 51 ist schwenkbar der senkrechte Abschnitt einer Achse 52 gelagert, dessen anderes Ende abgebogen ist und in einem Verbindungsstück endet, das eine schwenkbare Gabel 53 aufweist. Ein Handgriff 61 ist zwischen dem gebogenen Teil der Achse und der Gabel 53 vorgesehen. Die Gabel umschließt eine Buchse 55, die um eine waagrechte Achse 54 schwenkbar gelagert ist und die drehend und gleitend, wie es z. B. in der US-A 4474439 dargestellt ist, ein Kamerahalterohr 56 aufnimmt. Die Gabel 53, die schwenkbar am Ende der Achse 52 angeordnet ist, bildet eine Kardanaufhängung.

Am oberen Ende des Halterohrs 56 ist eine Halteplatte 57 vorgesehen, auf der die Kamera 58 (Fig. 1) befestigt wird, während am unteren Ende Gewichte 59, 60 vorgesehen sind, um die Kamera auszubalancieren.

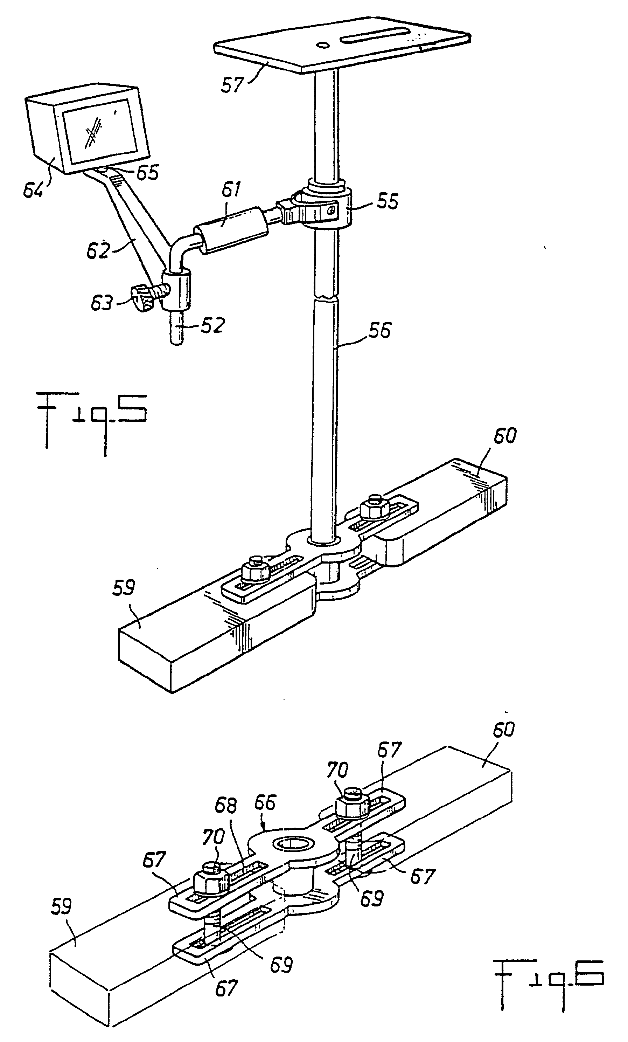

Wie Fig. 5 zeigt, ist es vorteilhaft, an der Achse 52 mittels einer durch eine Schraube 63 feststellbaren Konsole 62 eine Halterung für einen Videomonitor 64 vorzusehen, die mittels einer feststellbaren Schwenkachse 65 angelenkt ist. Damit ist der Videomonitor unabhängig von Bewegungen der Kamera bezüglich der Achse 52. Der Kameramann kann z. B. in azimutaler Richtung filmen und dabei eine Panoramaaufnahme machen, bei der das Kameraobjektiv von vorne nach hinten geführt wird, ohne dabei auch nur für eine Sekunde die Kontrolle des Bildes außer Acht lassen zu müssen.

Die zum Ausbalancieren dienenden Gewichte 59, 60 sind vorteilhafterweise die Batterie 59 und das die elektronische Schaltung aufnehmende Gehäuse 60 (oder auch das Tonbandgerät). Die Befestigung dieser Teile erfolgt mittels eines Teils 66 (Fig. 6) mit einer zentralen Buchse, die sich am Rohr 56 abstützt und über nicht dargestellte Klemmzähne festgelegt ist. An den Enden der Buchse sind zwei Flansche 67 vorgesehen, die sich in entgegengesetzte Richtungen erstrecken und mit Aussparungen 68 versehen sind. Zwischen den unteren und oberen Aussparungen können zwei Schwenkachsen 69 eingesetzt sein, auf deren Unterseite ein fester Anschlag vorgesehen ist, der die Achse verbreitert und auf deren oberem Gewindeteil 70 eine Mutter aufschraubbar ist, um die Achse festzuklemmen. Die Teile 59 und 60 sind gelenkig mit den Schwenkachsen 69 verbunden und durch Anziehen der Mutter 70 feststellbar.

Aufgrund der Aussparungen 68 ist es möglich, die Teile 50 und 60 vom Rohr 56 zu entfernen und damit das Trägheitselement dieser Teile bezüglich des Rohrs zu vergrößern. Dies bedingt eine Abschwächung der störenden Drehbewegungen der Kamera koaxial zum Rohr 56 und damit eine erhöhte Stabilität.

Aufgrund der ferner gegebenen Möglichkeit mit Hilfe der Achsen 69, die Teile 59, 60 nicht in deren Verlängerung anzuordnen, wie es dargestellt ist, sondern in seitlicher beliebiger Ausrichtung zum Rohr 56, kann ein Zentrierfehler der Kamera bezüglich des Rohrs 56 kompensiert werden.

## Patentansprüche

1. Körperstativ, insbesondere für Kameras mit einem von einem Kameramann (2) getragenen Traggestell und beweglichen ausbalancierten Parallelogrammarmen (18, 19) zur Aufnahme der Kamera (3), wobei das Traggestell eine steife, im wesentlichen ringförmige Schale aufweist, die aus zwei Halbschalen besteht, nämlich einer vorderen unteren Halbschale (4) und einer hinteren oberen Halbschale (5), die sich auf unterschiedlichen Höhen befinden und sich auf dem Bauchbereich (3) bzw. dem rückwärtigen Lendenbereich des Kameramannes (2) abstützen, die Parallelogrammarme (18, 19) ein gelenkiges Verbindungsteil (21) aufweisen, mit dem die Kamera (3) über gelenkige Teile (45, 51, 52, 53, 56) verbunden ist, und für die Parallelogrammarme (18, 19) elastische Ausbalancierteile (26) vorgesehen sind, um das Kameragewicht im wesentlichen auszubalancieren, dadurch gekennzeichnet, daß symmetrisch auf beiden Seiten der Schalen (4, 5) schwenkbare Befestigungsanordnungen (14, 15) vorgesehen sind für zwei vordere, die Parallelogrammarme bildende Halbrahmen (18, 19), die über das gelenkige Verbindungsteil (21) miteinander verbunden und ständig zueinander parallel gehalten sind, und daß die elastischen Ausbalancierteile (26) zwischen den Halbrahmen (18, 19) und den Schalen (4, 5) vorgesehen sind.

2. Körperstativ nach Anspruch 1, dadurch gekennzeichnet, daß die schwenkbaren Befestigungsanordnungen (14, 15) im wesentlichen in der senkrechten Ebene angeordnet sind, die die Wirbelsäule des Kameramannes (2) enthält.

3. Körperstativ nach einem der Ansprüche 1 oder 2, dadurch gekennzeichnet, daß die schwenkbaren Befestigungsanordnungen (14, 15) im wesentlichen senkrecht zu einer Halterung (13) ausgerichtet sind, die fest mit einem Bügel (9) verbunden ist, der fest mit der vorderen Halbschale (4) verbunden ist.

4. Körperstativ nach einem der Ansprüche 1 bis 3, dadurch gekennzeichnet, daß die Enden eines jeden Halbrahmens (18, 19) gleitend und einstellbar in Buchsen (16, 17) eingreifen, die mittels der schwenkbaren Befestigungsanordnung verschwenkbar sind.

5. Körperstativ nach einem der Ansprüche 1 bis 4, dadurch gekennzeichnet, daß die Ausbalancieranordnung wenigstens eine Zugfeder (26) aufweist, die wenigstens einen Halbrahmen (18, 19) in Richtung nach oben und nach hinten unter einen Winkel von ungefähr 45° beaufschlagt.

6. Körperstativ nach einem der Ansprüche 1 bis 5, dadurch gekennzeichnet, daß das gelenkige Verbindungsteil (21) ein senkrechtes Tragteil (40) aufweist, das gelenkig und gleitend an den zwei Halbrahmen (18, 19) angeordnet ist sowie eine das Gleiten blockierende Einrichtung (46, 48) aufweist, die mit dem Gelenk der Halbrahmen (18, 19) zusammenwirkt.

7. Körperstativ nach einem der Ansprüche 1 bis 6, dadurch gekennzeichnet, daß das gelenkige Verbindungsteil (21) ein Tragteil (40) aufweist, das mit dem Halbrahmen (18, 19) verbunden ist und an dem ein Arm (45, 50, 51, 52) angeordnet ist, der mittels paralleler Gelenkachsen gelenkig ist und dessen Ende eine Anordnung (53,...) aufweist zur gelenkigen Halterung einer Kamera (58).

8. Körperstativ nach Anspruch 7, dadurch gekennzeichnet, daß ein Videomonitor (64) am gelenkigen Arm (45, 50, 51, 52) angeordnet ist.

9. Körperstativ nach einem der Ansprüche 7 oder 8, dadurch gekennzeichnet, daß die Halteanordnung (53,..) für die Kamera ein Tragrohr (56) aufweist, an dessen einem Ende die Halterung (57) für die Kamera (58) und an dessen anderem Ende Ausgleichsteile (59, 60) vorgesehen sind, deren Stellung radial und winkelmäßig in einer Radialebene einstellbar ist.

## Claims

1. Body-mounted support, in particular for cameras having a supporting frame worn by a cameraman (2) and moving counterbalanced parallelogram arms (18, 19) for holding the camera (3), such that the supporting frame has a stiff, essentially ringed-shaped shell, which consists of two half-shells, namely a front lower half-shell (4) and a rear upper half-shell (5), which are situated at different levels and are supported on the stomach region (3) and the rear lumbar region, respectively, of the cameraman (2), the parallelogram arms (18, 19) have an articulated connecting section (21), to which the camera (3) is connected via articulated sections (45, 51, 52, 53, 56) and flexible counter-balancing sections (26) are provided for the parallelogram arms (18, 19), essentially to counterbalance the weight of the camera, characterised in that swivelling attachments arrangements (14, 15) are provided for the two front half-frames (18, 19) which form the parallelogram arms, which are connected to each other via the articulated connecting section (21) and are constantly kept parallel to each other, and in that the flexible counterbalancing sections (26) are provided between the half-frames (18, 19) and the shells (4, 5).

2. Body-mounted support according to Claim 1, characterised in that the swivelling attachment arrangements (14, 15) are essentially arranged in the vertical plane which contains the spinal column of the cameraman (2).

3. Body-mounted support according to one of Claims 1 or 2, characterised in that the swivelling attachment arrangements (14, 15) are essentially aligned perpendicularly with respect to a mounting (13) which is rigidly connected to a loop (9), which is rigidly connected to the front half-shell (4).

4. Body-mounted support according to Claims 1 to 3, characterised in that the ends of each half-frame (18, 19) engage in a sliding and adjustable fashion in sleeves (16, 17), which can be swivelled by means of the swivelling attachment arrangement.

5. Body-mounted support according to one of Claims 1 to 4, characterised in that the counterbalancing arrangement has at least one tension spring (26) which stresses at least one half-frame (18, 19) in the upward direction and to the rear at an angle of about 45°.

6. Body-mounted support according to one of Claims 1 to 5, characterised in that the articulated connecting section (21) has a vertical supporting section (40), which is arranged in an articulated and sliding fashion on the two half-frames (18, 19) as well as a device (46, 48) which blocks the sliding and interacts with the joint of the half-frames (18, 19).

7. Body-mounted support according to one of Claims 1 to 6, characterised in that the articulated connecting section (21) has a supporting section (40), which is connected to the half-frame (18, 19) and on which an arm (45, 50, 51, 52) is arranged, which is articulated by means of parallel articulation shafts and whose end has an arrangement (53,...) for the articulated mounting of a camera (58).

8. Body-mounted support according to Claim 7, characterised in that a video monitor (64) is arranged on the articulated arm (45, 50, 51, 52).

9. Body-mounted support according to one of Claims 7 or 8, characterised in that the holding arrangement (53,...) for the camera has a support tube (56), on whose one end the holder (57) for the camera (58) is provided and on whose other end compensating sections (59, 60) are provided, whose position can be adjusted radially and angularly in a radial plane.

## Revendications

1. Support d'équipement à porter sur le corps, notamment de caméra, comportant un harnais porté par un opérateur et des bras en parallélogramme mobiles équilibrés (18, 19) destinés au montage de la caméra (3), le harnais présentant une coque rigide sensiblement annulaire formée de deux demi-coques respectivement avant inférieure (4) et arrière supérieure (5) situées à des hauteurs différentes pour pouvoir s'appuyer respectivement sur la région abdominale (3) et la région dorso-lombaire de l'opérateur (2), les bras en parallélogramme (18, 19) présentant une pièce de liaison articulée (21) dont la caméra (39) est solidaire par des moyens articulés (45, 51, 52, 53, 56), et des moyens d'équilibrage élastiques (26) étant prévus pour les bras en parallélogramme (18, 19) pour équilibrer sensiblement le poids de la caméra, caractérisé en ce que symétriquement de chaque côté de ladite coque (4, 5) sont prévus des moyens (14, 15) de fixation pivotante de deux demi-cadres avant (18, 19) formant les bras en parallélogramme, qui sont reliés par la pièce de liaison articulée (21) de manière à rester constamment parallèles et en ce que les moyens d'équilibrage élastiques (26) sont prévus entre les demi-cadres (18, 19) et les coques (4, 5).

2. Support selon la revendication 1, caractérisé en ce que les moyens de fixation pivotante (14, 15) sont sensiblement dans le plan vertical de la colonne vertébrale de l'opérateur.

3. Support selon l'une quelconque des revendications 1 ou 2, caractérisé en ce que les moyens de fixation pivotante (14, 15) sont alignés sensiblement verticalement sur un support (13) solidaire d'un arceau (9) lui-même solidaire de la demi-coque avant (4).

4. Support selon l'une quelconque des revendications 1 à 3, caractérisé en ce que les extrémités de chacun des demi-cadres (18, 19) sont reçues de manière réglable en coulissement dans des manchons (16, 17) pivotant grâce aux moyens de fixation pivotante (14, 15).

5. Support selon l'une quelconque des revendications 1 à 4, caractérisé en ce que les moyens d'équilibrage comportent au moins un ressort de traction (26) rappelant au moins un demi-cadre (18, 19) vers le haut et l'arrière sous un angle voisin de 45°.

6. Support selon l'une quelconque des revendications 1 à 5, caractérisé en ce que la pièce de liaison articulé (21) comporte un élément vertical de support (40) monté articulé et coulissant sur les deux demi-cadres (18, 19) et un dispositif de blocage (46, 48) de coulissement coopérant avec l'articulation des demi-cadres (18, 19).

7. Support selon l'une quelconque des revendications 1 à 6, caractérisé en ce que la pièce de liaison articulée (21) comporte un élément de support (40) lié au demi-cadre (18, 19) et sur lequel est monté un bras (45, 50, 51, 52) articulé par des axes d'articulation parallèles, au bout duquel est monté un système (53,...) de suspension articulée de caméra (58).

8. Support selon la revendication 7, caractérisé en ce qu'un moniteur vidéo (64) est monté sur le bras articulé (45, 50, 51, 52).

9. Support selon l'une quelconque des revendications 7 ou 8, caractérisé en ce que le système de suspension (53,...) de l'équipement de caméra comprend un tube (56) de support comportant à une extrémité le support (57) de caméra (58) et à l'autre extrémité des éléments d'équilibrage (59, 60) dont la position est réglable radialement et angulairement dans un plan radial.

Fig.1

Fig.2

Fig.3

Fig.4

EP 0 316 370 B1

Fig.5

Fig.6